# EUROPEAN PATENT APPLICATION

(11) **EP 3 904 941 A1**
(43) Date of publication of application: **03.11.2021**
(21) Application number: 19904366.2
(22) Date of filing: 25.12.2019
(51) Int. Cl.: G02B 26/00, G02B 3/00, G02B 26/08

(54) **ELECTRICAL DISPLACEMENT MATERIAL, OPTICAL ELEMENT USING SAME, MICRO LENS ARRAY, AND METHOD OF DEVELOPING OPTICAL ELEMENT**

(30) Priority: 26.12.2018 JP 2018243600
(71) Applicant: Nitto Denko Corporation, Ibaraki-shi, Osaka 567-8680 (JP); Shinshu University, Matsumoto-shi, Nagano 390-8621 (JP)
(72) Inventor: YAMADA, Yasumi, Ibaraki-shi, Osaka 567-8680 (JP); EMORI, Hideyuki, Ibaraki-shi, Osaka 567-8680 (JP); HIRAI, Toshihiro, Ueda-shi, Nagano 386-8567 (JP)
(74) Representative: Müller-Boré & Partner Patentanwälte PartG mbB
(86) International application number: PCT/JP2019/051025
(87) International publication number: WO 2020/138242

(57) **Abstract**

An electrically deformable material with a reduced driving voltage, and applications thereof are provided. An optical device is fabricated by providing an electrically deformable material between a first electrode and a second electrode. By adding to a gelatinous polymer material an ionic liquid having a negative ion transport number of 0.4 or greater at 25°C or an ionic surfactant having a negative ion transport number of 0.2 or greater at 25°C, the electrically deformable material is prepared. In this optical device, the voltage level to drive the electrically deformable material is reduced, and a light scatterer is formed on the surface of the first electrode or the second electrode by applying the reduced voltage.

## Description

### TECHNICAL FIELD

The present invention relates to an electrically deformable material, an optical device using the same, a microlens array, and a method of fabricating an optical device.

### BACKGROUND ART

Microlens arrays (MLAs) are used in the field of high-resolution imaging including optical microscopes and mini projectors. Recently, MLAs have been applied to head-mounted displays (HMDs) for viewing virtual reality (VR) contents, and there is a demand for a technology of actively controlling micro-optical devices.

Meanwhile, a flexible polymer actuator applied to an artificial muscle actuator (see, for example, Patent Document 1 presented below), and a polymer gel actuator applied to a positioning device (see, for example, Patent Document 2 presented below) have been proposed. The flexible polymer actuator is formed of a gel which contains polyvinyl chloride of 1 to 50 parts by weight, a plasticizer of 50 to 150 parts by weight, and an ionic liquid of 1 to 30 parts by weight.

### RELATED ART DOCUMENT(S)

Patent Document 1: JP Registered Patent No. 5392669
Patent Document 2: JP Patent Application Laid-open Publication No. 2014-23266

### SUMMARY OF THE INVENTION

### TECHNICAL PROBLEM TO BE SOLVED

If the shape of an optical device is reversibly controlled by regulating an applied voltage, then optical characteristics of that optical device should be adjustable with a simple configuration. It is desirable for such a simple configuration to operate at a low driving voltage applied to the optical device.

An objective of the present invention is to provide an electrically deformable material operable at a reduced driving voltage, and applications of the electrically deformable material.

### TECHNICAL SOLUTION(S)

In an embodiment, in order to reduce the driving voltage for an electrically deformable material, an ionic liquid or an ionic surfactant that satisfies a predetermined condition is added to a polymer material configuring the electrically deformable material.

In one aspect, an electrically deformable material contains a gelatinous polymer material, and an ionic liquid having a negative ion transport number of 0.4 or greater at 25°C.

In another aspect, an electrically deformable material contains a gelatinous polymer material, and an ionic surfactant having a negative ion transport number of 0.2 or greater at 25°C.

### ADVANTAGEOUS EFFECT OF THE INVENTION

With the above configuration(s), an electrically deformable material operable at a reduced driving voltage and applications thereof are achieved.

### BRIEF DESCRIPTION OF DRAWINGS

FIG. 1 is a diagram for explaining the operation principle of an optical device according to an embodiment;
FIG. 2 illustrates examples of deformation of the optical device;
FIG. 3 shows voltage response characteristics of electrically deformable materials with various types of ionic liquids added;
FIG. 4 shows physical properties of ionic liquids and the deforming condition of a gel;
FIG. 5 shows a relationship between the amount of ionic liquid added and deformation of the polymer gel;
FIG. 6 shows evaluation results of light scatterers formed with different amounts of an ionic liquid by application of a voltage;
FIG. 7 shows influence of ionic liquids on degradation of an electrode;
FIG. 8 shows voltage response characteristics of an electrically deformable material when various ionic surfactants are added;
FIG. 9 shows a measurement result of ¹H-NMR self-diffusion coefficient of an ionic surfactant;
FIG. 10 shows a ¹H-NMR spectrum of an ionic surfactant; and
FIG. 11 illustrates an example of application of the optical device of the embodiment to a microlens array.

### PREFERRED MODE(S) OF IMPLEMENTING THE INVENTION

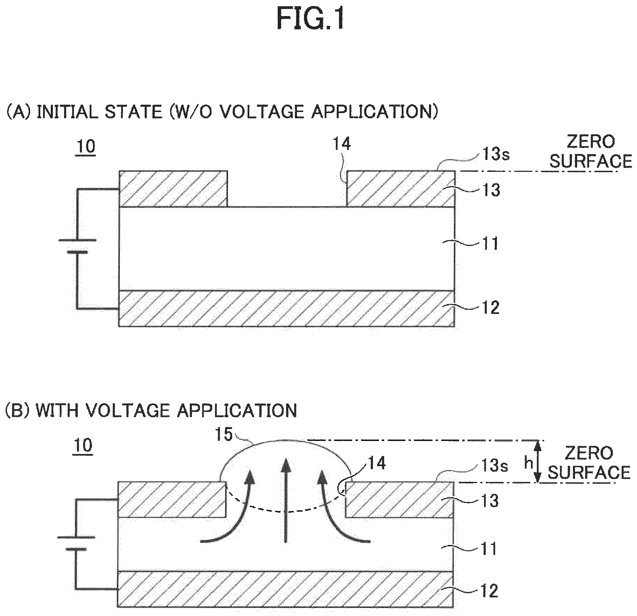

FIG. 1 is a diagram for explaining the basic configuration and operation of an optical device 10 using an electrically deformable material 11 according to an embodiment. The electrically deformable material 11 of the embodiment is a gelatinous polymer material (which may be called a polymer gel) to which an ionic liquid or an ionic surfactant that satisfies a predetermined condition is added. In the example of FIG. 1, the electrically deformable material 11 is provided between electrodes 12 and 13, and deforms when a voltage is applied between the electrodes, thereby forming a light scatterer 15 on the surface of the electrode 13.

The light scatterer 15 has a protrusion shape. In the present specification and claims, the term "protrusion shape" means a state in which at least a portion of the deformed polymer gel protrudes upward from a surface 13s (i.e., the zero surface) of the electrode 13 in the laminated or layered direction, and is not limited to the convex surface illustrated in FIG. 1.

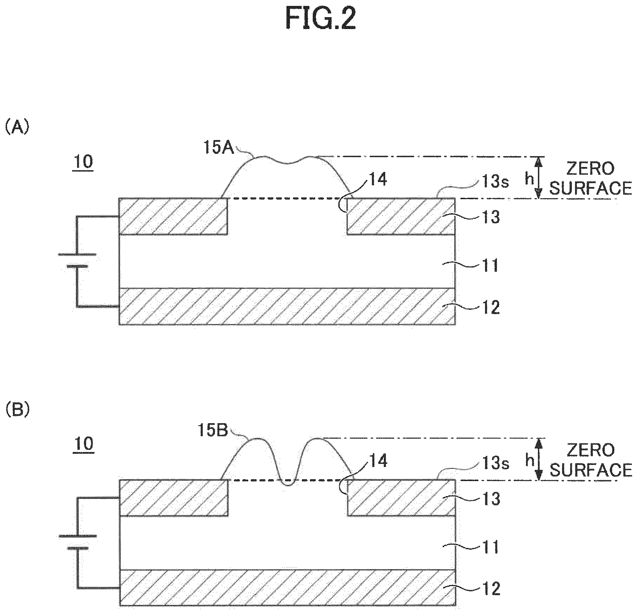

As illustrated in configurations (A) and (B) of FIG. 2, a protrusion with a dent around the center is also included in the "protrusion shape", because when viewed as a whole, the light scatterer 15 protrudes from an aperture 14 of the electrode 13 and exhibits the scattering effect. Not only the configuration (A) of FIG. 2 in which the vertex of the light scatterer 15A is slightly dented or concaved, but also the configuration (B) of FIG. 2, in which the center of the light scatterer 15B is below the surface 13s of the electrode 13, is included in the "protrusion shape".

The polymer gel may be polyvinyl chloride (PVC), polymethylmethacrylate (PMMA), polyurethane (PU), polystyrene (PSt), polyvinyl acetate (PVAc), polyvinyl alcohol (PVA), polycarbonate (PC), polyethylene terephthalate (PET), polyacrylonitrile (PAN), silicone rubber (SR), or the like. Any suitable polymer (or resin) material transparent to the wavelength used may be appropriately selected. In this embodiment, PVC, which can deform greatly under the effect of the electric field and is easy to handle, is used.

By adding an ionic liquid or an ionic surfactant satisfying a predetermined condition to the polymer gel, the driving voltage of the electrically deformable material 11 can be reduced. In other words, the deformation efficiency of the electrically deformable material 11 is improved by adding an ionic liquid or an ionic surfactant.

An ionic liquid is a salt composed of a cation (a positively charged ion) and an anion (a negatively charged ion), and is typically in the liquid phase at 25°C. One of the predetermined conditions is that the ionic liquid has an anion (negative ion) transport number of a certain value or greater at 25°C. Details of this condition will be described later.

An ionic surfactant is a substance that contains one or both of a cation and an anion, and has a hydrophilic group and a hydrophobic group in the molecule. One of the predetermined conditions is that the ionic surfactant has an anion (negative ion) transport number of a certain value or greater at 25°C. The details of this condition will also be described later.

In a preferred configuration, the weight percentage of the ionic liquid with respect to the polymer gel is 0.2 wt% to 1.5 wt%, and more preferably 0. 3 wt% to 1.0 wt%. Assuming that the weight ratio of the polymer gel is 1 (or that the weight percentage of the polymer gel is 100%), the driving voltage of the electrically deformable material 11 can be reduced by mixing the ionic liquid of above-described range into the polymer gel. The grounds for this effect will be described later.

When an ionic surfactant is used, the weight percentage of the ionic surfactant with respect to the polymer gel may be 0.1 wt% to 1.5 wt%. Assuming that the weight ratio of the polymer gel is 1 (or that the weight percentage of the polymer gel is 100%), the driving voltage of the electrically deformable material 11 can be reduced by mixing the ionic surfactant of the above-described range into the polymer gel.

A suitable plasticizer may be added to the polymer gel. The polymer gel may be dissolved in a solvent. When a plasticizer is used, dibutyl adipate (DBA), diethyl adipate (DEA), dioctyl adipate (DOA), diethyl sebacate (DES), dioctyl phthalate (DOP), diethyl phthalate (DEP), or the like may be used. For the solvent, tetrahydrofuran (THF) or other ether-based solvent may be used.

The materials of the electrodes 12 and 13 are not particularly limited, as long as they are electrically conductive. Either one or both of the electrodes 12 and 13 may be formed of a metal such as platinum, gold, silver, nickel, chromium, copper, stainless steel, titanium, tantalum, indium, palladium, lithium, niobium, or an alloy thereof. Alternatively, at least one of the electrodes 12 and 13 may be made of a transparent oxide semiconductor material such as indium tin oxide (ITO), or alternatively, a conductive polymer, conductive carbon, or the like.

The optical device 10 using the electrically deformable material 11 is driven by applying a voltage between the electrodes 12 and 13 which sandwich the electrically deformable material 11. In the examples of FIG. 1 and FIG. 2, the electrode 12 is a cathode and the electrode 13 is an anode. The electrode 13 has a configuration to allow a portion of the electrically deformable material 11 to protrude beyond the surface 13s of the electrode 13 when a voltage is applied. In the configurations of FIG. 1 and FIG. 2, the electrode 13 has an aperture 14 of the micron order in size.

In place of the aperture 14, a lighttransmitting non-conductive area, which is capable of deforming following the deformation of the electrically deformable material 11, may be provided to the electrode 13. Instead of forming the electrode 13 from a single conductive layer, an insulating sheet such as a resin sheet whose surface including the inner walls of the aperture is coated with a conductive film may be used.

Diagram (A) of FIG. 1 illustrates an initial state in which no voltage is applied. The electrode 12 and the electrode 13 is in surface contact with the layer of the electrically deformable material 11, and the electrically deformable material 11 stays within the opening 14 in a flat state. The surface position of the electrically deformable material 11 at this stage is lower than the surface 13s of the electrode 13 in the height direction (or the laminated direction).

As illustrated in Diagram (B) of FIG. 1 and Diagrams (A) and (B) of FIG. 2, when a voltage is applied between the electrodes 12 and 13, electrons are injected into the electrically deformable material 11 from the cathode electrode 12. The inner wall of the aperture 14 of the electrode 13, which serves as the anode, is positively charged. The electrically deformable material 11 containing electrons is attracted to the inner wall of the aperture 14 of the electrode 13.

During this process, owing to the anions (negative ions) in the ionic liquid having a predetermined ion-transport number, the electrically deformable material 11 is more efficiently attracted to the inner wall of the aperture 14. Similarly, anions (negative ions) in an ionic surfactant having a predetermined ion transport number allow the electrically displaced material 11 to be more efficiently attracted to the inner wall of the aperture 14. Due to the elasticity of the gel, the electrically deformable material 11 rises in the aperture 14 and protrudes from the surface 13s of the electrode 13 to form the light scatterer 15.

The deformation of the electrically deformable material 11 is based upon the voltageresponsiveness, while making use of the elasticity of the gel. The electrically deformable material 11 rises from the aperture 14 and protrudes beyond the surface 13s of the electrode 13. If the composition of the electrically deformable material 11 is uniform, a light scatterer 15 (including either light scatterer 15A or 15B) is substantially pointsymmetric with respect to the center of the aperture 14 at a constant voltage.

Deformation of the electrically deformable material 11 is reversible, and the optical device 10 can return to the initial state shown in Diagram (A) of FIG. 2 upon turning off of the voltage. Furthermore, the height "h" of the light scatterer 15 can be adjusted according to the level of the applied voltage.

The shape of the aperture 14 of the electrode 13 may be suitably designed according to the application purpose. An appropriate plane shape such as a circle, an ellipse, a polygon, or the like may be employed. The diameter of the aperture 14 is also appropriately designed depending on applications of the optical device 10. For example, the diameter may be set to less than 1 mm, preferably, to the range from 50 µm to 300 µm. When the diameter of the aperture 14 is 1 mm or greater, it may become difficult for the electrically deformable material 11 to efficiently protrude from the aperture 14 making use of the elasticity of the gel when a voltage is applied. By setting the diameter of the aperture 14 to 50 µm to 300 µm, the deformation efficiency of the polymer gel with respect to the voltage level is improved, and a light scatterer 15 can protrude almost symmetrically with respect to the center of the aperture 14.

An example of the fabrication process of the optical device 10 is as follows. The electrically deformable material 11 is prepared by mixing an ionic liquid or ionic surfactant satisfying a predetermined condition into a polymer gel. A plasticizer may be appropriately mixed into the polymer gel. Then the electrically deformable material 11 is applied onto the electrode 12 by casting or any other suitable method. Then, the electrode 13 having an aperture 14 is placed onto the layer of the electrically deformable material 11. When the electrically deformable material 11 contains a solvent, the electrode 13 may be placed after the solvent is evaporated by natural dry after the polymer gel is applied. A predetermined voltage is applied between the electrodes 12 and 13 to form a light scatterer 15 at the surface of the electrode 13.

The thickness of the layer of the electrically deformable material 11 is determined according to the size of the aperture 14, the height of the light scatterer 15 to be formed, the thicknesses of the electrodes 12 and 13, or other factors. For example, the thickness of the electrically deformable material 11 is 1 mm or less, and preferably 0.1 mm to 0.5 mm. When the thickness of the electrically deformable material 11 is 0.1 mm or less, handing may become slightly difficult. However, there may be tradeoff with respect to the aperture size of the electrode 13, and accordingly, in fabrication of a microlens array sheet having a large number of fine lenses, the thickness of the electrically deformable material 11 may be 0.1 mm or less.

### <ADDING OF IONIC LIQUID>

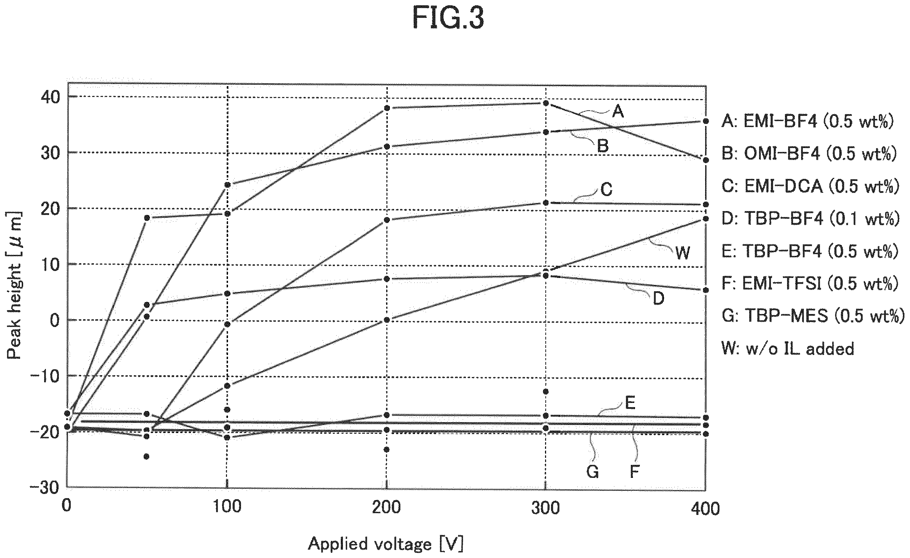

FIG. 3 shows voltage response characteristics of the electrically deformable materials 11 to which different ionic liquids are added. A polymer gel, in which PVC of 230,000 in weight-average molecular weight is dissolved in a tetrahydrofuran (THF) solvent, is prepared, and various ionic liquids are added to the polymer gel to fabricate a variety of samples. Each of the samples is sandwiched between a pair of electrodes as illustrated in FIG. 1, and voltage dependence of the peak height is measured, while changing the applied voltage. As the reference configuration, a polymer gel without an ionic liquid is prepared, and the voltage dependence of the peak height is measured as well. The "peak height" is the height "h" of the highest position of the protrusion from the surface 13s of the electrode 13.

More specifically, the polymer gel is applied onto the electrode 12, which serves as a bottom electrode, to a thickness of 300 µm to fabricate each of the samples including one having the reference configuration. A 30-micron thick metal foil having a hole of 100 microns in diameter is provided as a top electrode 13 onto the top surface of the polymer gel. The voltage applied between the electrodes 12 and 13
is varied in the range of 0 V to 400 V to measure the peak height "h" of the light scatterer 15 protruding from the electrode 13.

Line A represents the voltage dependence of the peak height of sample A in which 1-ethyl-3-methyl imidazolium tetrafluoroborate (EMI-BF4) is added as an ionic liquid. The weight percentage of EMI-BF4 to PVC is 0. 5 wt%. EMI is cation, and BF4 is anion.

Line B represents the voltage dependence of the peak height of sample B in which 1-octyl-3-methyl imidazolium tetrafluoroborate (OMI-BF4) is added as an ionic liquid. The weight percentage of OMI-BF4 to PVC is 0. 5 wt%. OMI is cation, and BF4 is anion.

Line C represents the voltage dependence of the peak height of sample C in which 1-ethyl-3-methyl imidazolium dicyanamide (EMI-DCA) is added as an ionic liquid. The weight percentage of EMI-DCA to PVC is 0. 5 wt%. EMI is cation, and DCA (C2N3) is anion.

Line D represents the voltage dependence of the peak height of sample D in which tetrabutylphosphonium tetrafluoroborate (TBP-BF4) is added as an ionic liquid. The weight percentage of TBP-BF4 to PVC is 0. 1 wt%. TBP is cation, and BF4 is anion.

Line E represents the voltage dependence of the peak height of sample E in which tetrabutylphosphonium tetrafluoroborate (TBP-BF4) is added as an ionic liquid. The type of ionic liquid is the same as that of sample D, but the weight percentage of TBP-BF4 to PVC is 0. 5 wt%. TBP is cation, and BF4 is anion.

Line F represents the voltage dependence of the peak height of sample F in which 1-ethyl-3-methyl imidazolium trifluoromethanesulfonimide (EMI-TFSI) is added as an ionic liquid. The weight percentage of EMI-TFSI to PVC is 0. 5 wt%. EMI is cation, and TFSI is anion.

Line G represents the voltage dependence of the peak height of sample G in which tetrabutylphosphonium methane sulfonate (TBP-MES) is added as an ionic liquid. The weight percentage of TBP-MES to PVC is 0. 5 wt%. TBP is cation, and MES is anion.

Line W represents the voltage dependence of the peak height of the reference configuration, that is, the peak height of the PVC polymer gel of Sample W without ionic liquid added.

From the measurement results of FIG. 3, by using a polymer gel that induces dielectric polarization, the polymer gel deforms when a voltage is applied, even if no ionic liquid is added. In Sample W without containing an ionic liquid, the height of the light scatterer 15 increases almost linearly with respect to the applied voltage, once the applied voltage exceeds a certain level. However, a voltage as high as 400 V is required to cause Sample W to protrude from the surface 13s of the electrode 13 to a height of 20 µm.

In contrast, sample A containing 0.5 wt% EMI-BF4 as the ionic liquid, and Sample B containing 0.5 wt% OMI-BF4 allow the electrically deformable material 11 to protrude up to a height of 20 µm or greater by applying a voltage of 100 V or less. In particular, Sample A deforms to a height of 20 µm at a voltage of 50 V, and deforms to a height of a little less than 40 µm at a voltage of 200 V. Sample B also deforms to a height of 25 µm at a voltage of 100 V, and deforms to a height of 30 µm at a voltage of 200 V.

With Sample C containing 0.5 wt% EMI-DCA, the same peak height of 20 *µ*m is achieved at a half voltage (210 V to 220 V), compared with Sample W which does not contain ionic liquid. The deformation efficiency is greatly improved.

With Sample D containing 0.1 wt% TBP-BF4, the light scatterers 15 starts protruding from the surface 13s of the electrode 13 at a voltage of 50 V; however, the peak height remains less than 10 *µ*m even if the voltage is increased. The change in the peak height is small over the range of 50 V to 400 V. It is difficult for Sample D to accurately regulate the height of the light scatterer 15 by voltage control.

Sample E containing 0.5 wt% TBP-BF4, sample F containing 0.5 wt% EMI-TFSI, and sample G containing 0. 5 wt% TBP-MES cannot form a light scatterer 15 protruding from the surface 13s of the electrode 13 even if a voltage of 400 V is applied.

From the measurement results of FIG. 3, it may be considered that the type (i.e., physical property) or the amount of the ionic liquid added contributes to reduction of the voltage for driving the electrically deformable material 11.

### <RELATION BETWEEN POLYMER GEL DEFORMATION AND PHYSICAL PROPERTIES OF IONIC LIQUID>

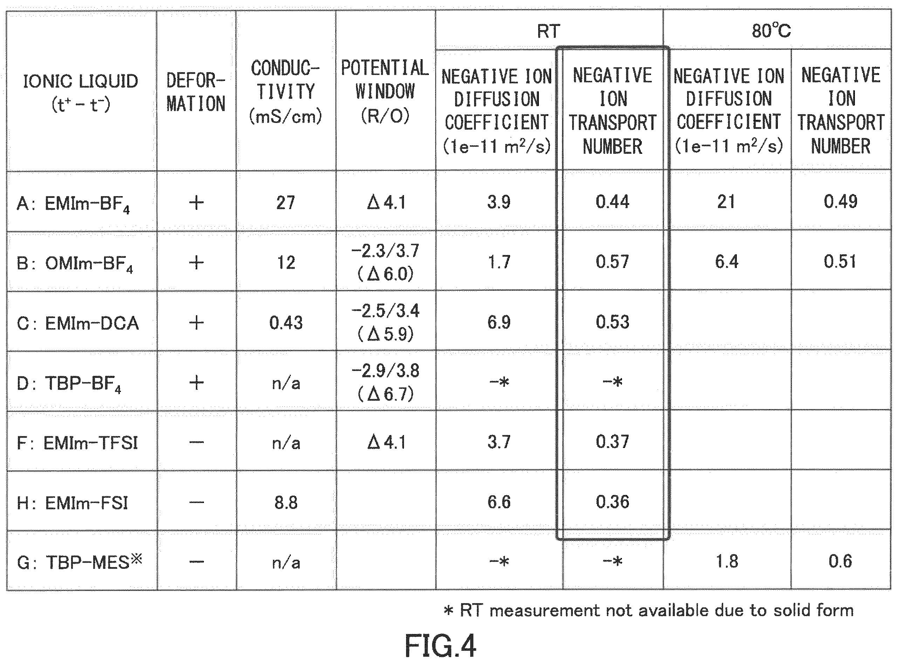

FIG. 4 shows relationship between deformation of polymer gels and physical properties of ionic liquids. In addition to Samples A to G used in FIG. 3, Sample H which contains 1-ethyl-3-methyl imidazolium fluorosulfonylimide (EMI-FSI) as the ionic liquid is measured.

Among Samples A to H with various types of ionic liquids having been added, those samples having deformation of the plus sign show positive deformation where the polymer gel protrudes beyond the surface 13s of the electrode 13 to form a light scatterer 15 when a voltage is applied. Those samples having deformation of the minus sign show negative deformation where the polymer gel does not protrude from the surface 13s of the electrode 13 even if a voltage is applied.

Physical properties of each ionic liquid include conductivity, potential window range, the diffusion coefficient and transport number of negative ions at 25°C. Because some of the ionic liquids used are solid at 25°C, these solid ionic liquids are heated to 80°C. For the solid ionic liquids that melt at 80°C, the diffusion coefficient and transport number of negative ions are measured.

Among the above-described physical properties, conductivity is first considered. Although the conductivity of Sample C is smaller by two digits in magnitude than those of Samples A and B, the polymer gel of Sample C deforms in the positive direction. In contrast, in Sample H which has a higher conductivity than Sample C, the polymer gel does not deform in the positive direction. It may be considered that the conductivity of the ionic liquid is not directly related to the deformation efficiency of the polymer gel.

Potential window is a potential range or width within which the electrochemical stability is maintained in the system, for example, one illustrated in FIG. 1. The wider the potential window (i.e., the greater the value), the broader the range in which the system stays electrochemically stable. The potential windows of Sample A and Sample F are the same, but the polymer gel of Sample A deforms in the positive direction, while the polymer gel of Sample F does not deform in the positive direction. It may be considered that the width of the potential window of the ionic liquid is not directly related to the deformation efficiency of the polymer gel.

Next, consideration is made to the diffusion coefficient and transport number of anions (negative ions) at 25°C. The diffusion coefficients of positive and negative ions contained in the ionic liquid are measured using a VNMR System manufactured by Varian Inc., which is a solid-state nuclear magnetic resonance (NMR) system. The measurement procedure is to inject ionic liquid into the capillary, and set the capillary into the system. The signal intensity with respect to the change in the magnetic field is measured at a predetermined temperature (25°C and 80°C in this example), and the diffusion coefficients of positive and negative ions are calculated from the Stokes-Einstein equation.

The negative ion transport number represents the ratio of an electric current derived from the anion to the total electric current flowing through the ionic liquid when an electric current is applied to the ionic liquid. The negative ion transport number is calculated as the ratio of the diffusion coefficient of the negative ion to the above-calculated sum of the diffusion coefficients of the negative ion and the positive ion (Dₐₙᵢₒₙ/ (D_{cation} + Dₐₙᵢₒₙ) , where "D" stands for diffusion coefficient.

The ionic liquids of Samples A, B, C, F, and H are in the liquid phase at 25°C, and the diffusion coefficient and negative ion transport number of the respective ionic liquids are determined from the measurement results using a pulsed-field-gradient NMR apparatus. Samples A, B, and C, which exhibit positive deformation, have 0.4 or higher values of negative ion transport number at 25°C. In contrast, the negative ion transport number of Samples F and H, which do not exhibit positive deformation, is less than 0.4 at 25°C. From this result, it may be considered that the negative ion transport number at room temperature (25°C) affects the deformation efficiency of the polymer gel.

The ionic liquid TBP-BF4 added to Sample D, which exhibits positive deformation, does not melt at the permissible temperature (80°C) of heating of the liquid chromatograph used, and accordingly, the diffusion coefficient could not be measured.

The ionic liquid TBP-MES added to Sample G, which does not show positive deformation, is also solid at 25°C, and therefore, the diffusion coefficient at this temperature could not be measured. This ionic liquid melts at 80°C, and the diffusion coefficient and the transport number of negative ions are calculated at 80°C. The calculated value of negative ion transport number is 0.6.

From the results of FIG. 4, it is understood that the preferable range of the ionic liquid added to the electrically deformable material 11 has a negative ion transport number is 0.4 or greater at 25°C.

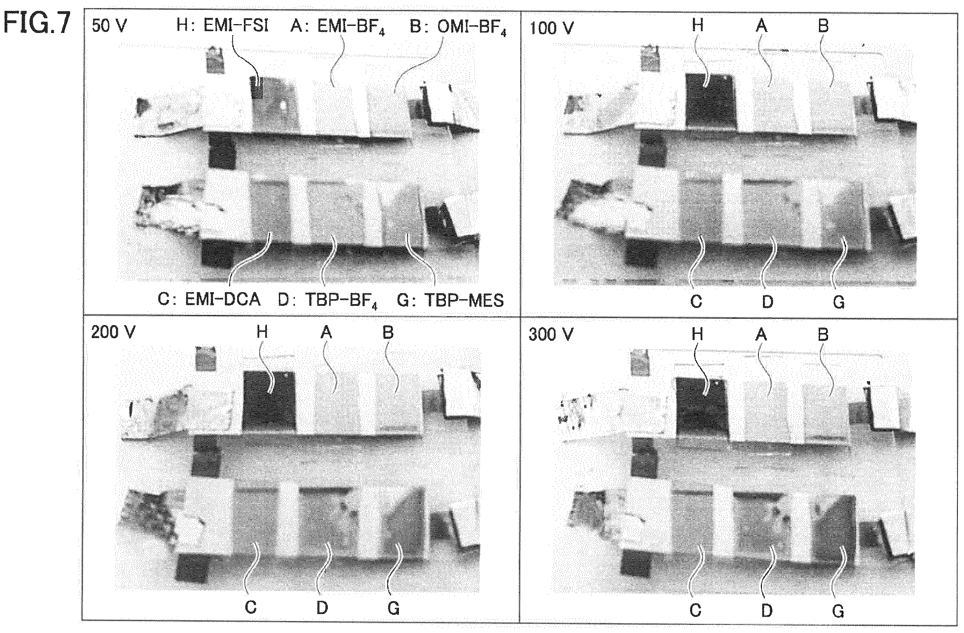

From FIG. 3 and FIG. 4, it may be inferred that an ionic liquid containing anions of a smaller size or molecular weight contributes to improvement of the deformation efficiency of the polymer gel. On the other hand, it may be considered that the cation size of an ionic liquid hardly contribute to the deformation efficiency. However, cation type may affect the deterioration of the cathode because the deformation efficiency of sample D is insufficient, compared with Samples A and B. Deterioration of cathode will be described later with reference to FIG. 7.

As for Sample G, the anion size and the cation size of the ionic liquid are medium, and this ionic liquid is solid at 25°C. It may be concluded that this ionic liquid hardly contributes to the deformation efficiency of the gel even if the ionic liquid is dispersed in the polymer gel by stirring.

From the above-described considerations, a comparatively small-size ion such as Cl⁻ or Br⁻ may be used as anion, in addition to BF4⁻ and DCA. Variety of ionic liquids can be prepared by selecting a cation so as to suppress deterioration of the cathode. For example, Li-BF4⁻ may be used as the ionic liquid.

### <RELATION BETWEEN CONTENT OF IONIC LIQUID AND DEFORMATION OF POLYMER GEL>

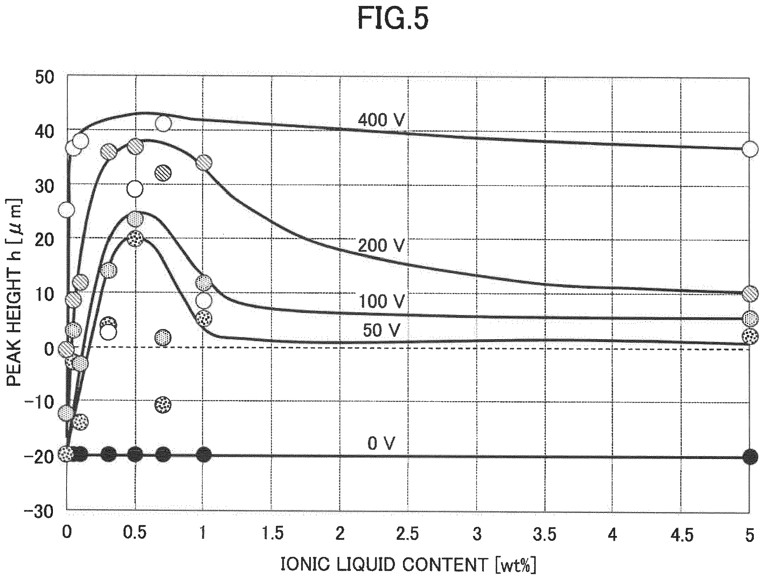

FIG. 5 shows the relationship between ionic liquid content and deformation of polymer gel. The horizontal axis is the content (wt%) of ionic liquid added to the polymer gel, and the vertical axis is the peak height of deformation.

PVC with a molecular weight of 230,000 is used as the polymer material, and EMI-BF4 of Sample A is used as the ionic liquid. The content of EMI-BF4 added is changed in the range of 0 wt% to 5.0 wt%. The voltage to be applied is also changed among 0 V, 50 V, 100 V, 200 V, and 400 V

Regardless of the voltage level, positive deformation is achieved when ionic liquid of 0.2 wt% to 1.5 wt% is added. Further, deformation is maximized with 0.3 wt% to 1.0 wt% ionic liquid. By adding an ionic liquid in this range, a light scatterer 15 can be produced on the surface of the electrode 13 by applying a voltage of 100 V or less. When the ionic liquid content is 5.0 wt%, the shape memory phenomenon, in which the deformation does not return even if the voltage is turned off, occurs.

From FIG. 5, it is understood that the weight percentage of the ionic liquid in the polymer gel is 0.2 wt% to 1.5 wt%, preferably 0.3 wt% to 1.0 wt%. This range well agrees with the measurement result of FIG. 3.

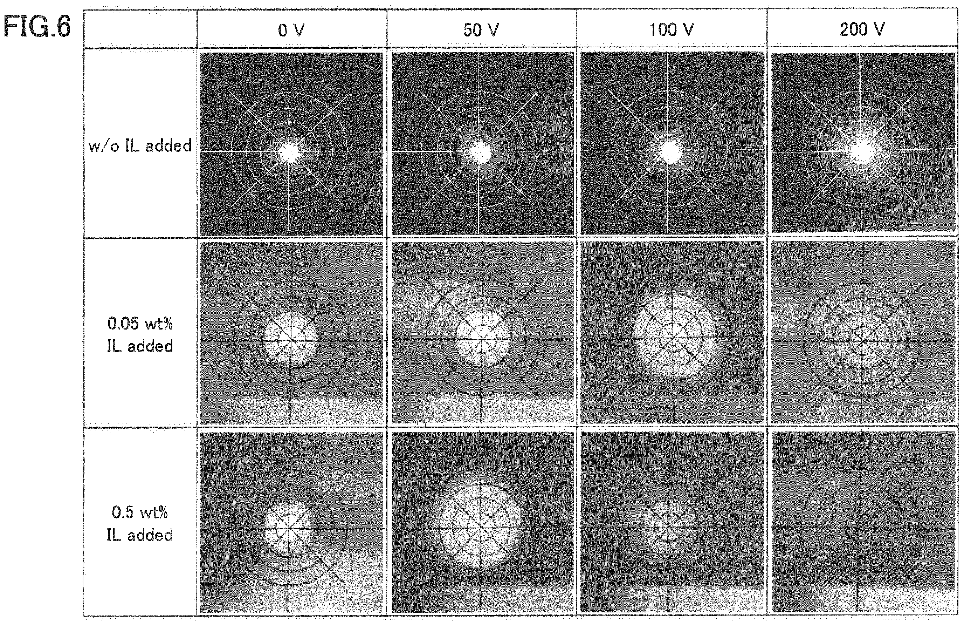

FIG. 6 shows the evaluation results of light diffusion distribution of the light scatterer formed by applying a voltage to the electrically deformable material, with different amounts of ionic liquid added. The optical device 10 of FIG. 1 is fabricated using EMI-BF4 as the ionic liquid, while the amount of EMI-BF4 added to the electrically deformable material 11 is changed. The electrically deformable material 11 contains PVC as a polymer gel, and DBA is added as a plasticizer. The content of DBA to the total amount of PVC and DBA is 83 wt%.

The electrode 12 which serves as a cathode is formed of ITO having a thickness of 150 µm. A voltage is applied to the electrically deformable material 11 sandwiched between the electrodes 12 and 13 to form a light scatterer 15. A laser diode is placed at the side of the ITO electrode 12, and a screen is provided on the side of the electrode 13 on which the light scatterer 15 is formed. A laser beam of red collimated light is incident on the optical element 10 from the back surface of the electrode 12, and light diffusion is observed on the screen.

The screen is placed on the light emitting side of the light scatterer 15 at a position farther than the focal point of the light scatterer 15. Diffusion of light after the light has been focused at the focal point of the light scatterer 15 is observed on the screen. This is because observation with the naked eyes is difficult. The diameter of the light scatterer 15 of the optical element 10 is as small as 100 µm, while the height of the light scatterer 15 is only 0 to 40 µm, and the focal point of the light scatterer 15 is too close to the optical device 10, which makes it difficult to observe with the naked eyes. By observing the light diffusion at a position beyond the focal point of the light scatterer 15, the focusing state can be evaluated.

With the sample to which the ionic liquid is not added (denoted as "w/o IL" in the figure), no light scatterer 15 protruding from the surface of the electrode 13 is formed even when a voltage of 200 V is applied. The red collimated light incident on the back surface of the optical device 10 is not focused, and passes through the optical device 10 as the collimated light. In this case, a spot of a constant size is formed on the screen regardless of the voltage level.

With the sample to which 0.05 wt% of EMI-BF4 is added, the polymer gel slightly protrudes beyond the surface of the electrode 13 when a voltage of 100 V is applied. However, the focusing function is insufficient, and the light beam is almost parallel at the position of the screen, on which a light spot is maintained. When a voltage of 200 V is applied, a light scatterer 15 having a peak height of about 10 µm (with a gradual curvature) is formed. The light having been focused at the focal point of the light scatterer 15 diffuses and spreads, and no light spot appears on the screen.

With the sample to which 0.5 wt% of EMI-BF4 is added, a light scatterer 15 is formed on the surface of the electrode 13 by applying a voltage of 50 V, and the light that diffuses after the focusing is observed at the screen position. When a voltage is increased to 100 V and 200 V, the peak height of the light scatterer 15 increases, and a light scatterer 15 with a curvature higher than at 50 V is formed on the surface of the electrode 13. The light incident on the back surface of the optical device 10 is focused and then diffused sufficiently, and no light spot is observed at the screen position. These evaluation results agree with the measurement results of FIG. 5.

From the light diffusion distribution of FIG. 6, it is confirmed that the focal length of the light scatterer 15 can be varied by regulating the applied voltage. The optical device 10 of the embodiment can be used as a variable focal length lens.

### <INFLUENCE OF IONIC LIQUID (CATION) ON CATHODE DETERIORATION>

FIG. 7 shows the influence of ionic liquid on cathode deterioration. To fabricate test samples, PVC gels, to which various types of ionic liquid are added, are applied onto metal substrates, and ITO electrodes are placed as counterpart electrodes onto the respective PVC gels.

Six types of PVC gels are prepared, which include Sample A (containing 0.5 wt% EMI-BF4), Sample B (containing 0.5 wt% OMI-BF4), Sample C (containing 0.5 wt% EMI-DCA), Sample D (containing 0.1 wt% TBP-BF4), Sample H (containing 0.5 wt% EMI-FSI), and Sample G (containing 0.5 wt% TBP-MES). Of these, samples A to D show positive deformation in FIG. 3. Sample D contains less amount of ionic liquid, reduced to 0.1 wt%, because no deformation occurs when the same amount (0.5 wt%) of ionic liquid as the other samples is added.

Using the metal substrate and the ITO as the positive electrode and the negative electrode, respectively, the surface condition of the electrode is observed from the ITO side, while changing the voltage level applied to the PVC gel.

In the sample G having no deformation effect, deterioration of ITO (cathode) is observed at a low voltage of 50 V. Further, deterioration of the ITO electrode due to voltage application is also observed in sample D. It is considered that this is because the cation affects the deterioration of the ITO electrode. On the other hand, in the samples A to C having a sufficient deformation effect, deterioration of the ITO electrode was not observed even if the applied voltage was increased.

From the consideration based on FIG. 3 to FIG. 7, by adding an ionic liquid having a negative ion transport number of 0.4 or greater at 25°C to the polymer gel, greater deformation is achieved at a lower applied voltage, compared with a polymer gel to which no ionic liquid is added. In particular, when an ionic liquid having a small anion size, as in Sample A or B, is used, the peak height significantly changes in the voltage range at or below 100 V, and the light scatterer 15 can be easily controlled. That is, the presence or absence of the light scatterer 15, and the height of the light scatterer 15 can be adjusted by regulating the applied voltage level. With these samples, there is little adverse effect on the cathode when the optical device 10 is driven.

### <ADDING OF IONIC SURFACTANT>

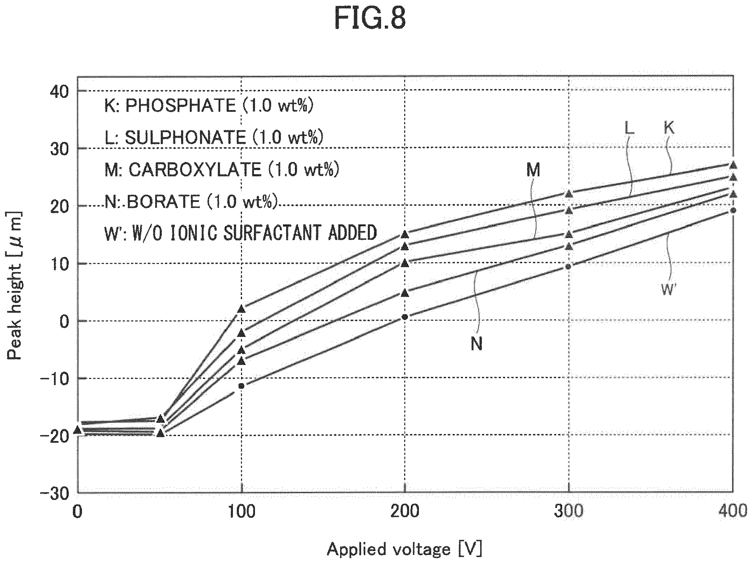

FIG. 8 shows voltage response characteristics of the electrically deformable materials 11 to which different ionic surfactants are added. A polymer gel, in which PVC of 230,000 in weight-average molecular weight is dissolved in a tetrahydrofuran (THF) solvent, is prepared, and various ionic surfactants are added to the polymer gel to fabricate samples. Each of the samples is sandwiched between a pair of electrodes as illustrated in FIG. 1, and voltage dependence of the peak height is measured, while changing the applied voltage. As the reference configuration, a polymer gel without an ionic surfactant is prepared, and the voltage dependence of the peak height is measured as well. The "peak height" is the height "h" of the highest position of the protrusion from the surface 13s of the electrode 13, as has been explained above.

In particular, the polymer gel is applied onto the electrode 12, which serves as a bottom electrode, to a thickness of 300 µm, for preparing the respective samples including the reference sample. A 30-micron thick metal foil having a hole of 100 microns in diameter is provided as a top electrode 13 onto the top surface of the polymer gel. The voltage applied between the electrodes 12 and 13 is varied in the range from 0 V to 400 V to measure the peak height "h" of the light scatterer 15 protruding from the electrode 13.

Line K represents the voltage dependence of the peak height of sample K in which a phosphoric acid-based surfactant, more specifically, aliphatic phosphate is added as the ionic surfactant. The weight percentage of the aliphatic phosphate with respect to PVC is 1.0 wt%.

Line L represents the voltage dependence of the peak height of Sample L in which a sulfonic acid-based surfactant, more specifically, sodium lauryl sulfonate is added as the ionic surfactant. The weight percentage of sodium lauryl sulfonate with respect to PVC is 1.0 wt%.

Line M represents the voltage dependence of the peak height of Sample M in which a carboxylic acid-based surfactant, more specifically, sodium polyoxyethylene lauryl ether acetate is added as the ionic surfactant. The weight percentage of polyoxyethylene lauryl ether acetate with respect to PVC is 1.0 wt%.

Line N represents the voltage dependence of the peak height of Sample N in which a boric acid-based surfactant, more specifically, tetradecylbolate (boric acid ester) is added as the ionic surfactant. The weight percentage of boric acid ester with respect to PVC is 1.0 wt%.

Line W' represents the voltage dependence of the peak height of the PVC polymer gel of Sample W' without containing ionic surfactant, prepared as the reference sample.

According to the measurement results of FIG. 8, the polymer gel deforms in response to application of a voltage because of the negatively charged plasticizer or polymer, even if no ionic surfactant is added. In Sample W' formed of the polymer gel without containing ionic surfactant, the height of the light scatterer 15 increases substantially linearly with respect to the applied voltage, after the applied voltage exceeds a certain level. However, voltage of 400 V is required to cause the sample W' to protrude from the surface 13s of the electrode 13 to 20 µm height.

On the other hand, the electrically deformable material 11 of Sample K to which 1.0 wt% of aliphatic phosphate has been added as the ionic surfactant, and Sample L to which 1.0 wt% of sodium lauryl sulfonate has been added can be driven to the height of 20 µm or higher by applying a voltage of 300 V or less. In particular, Sample K deforms to the height of 20 µm at a voltage of 250 V. Sample M and Sample N also have sufficient deformation efficiency, compared with Sample W' without containing ionic surfactant under the condition of the same voltage level.

When a nonionic surfactant is added to the polymer gel, only the same degree of the voltage response as Sample W', in which no ionic surfactant has been added, is acquired.

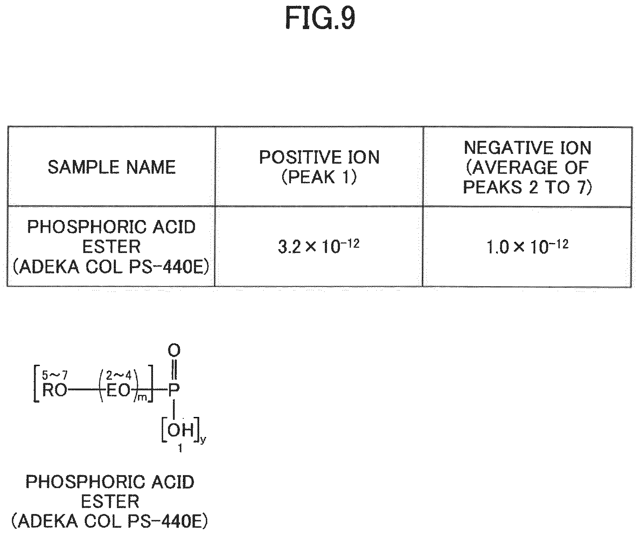

FIG. 9 shows measurement results of ¹H-NMR self-diffusion coefficient of the phosphoric acid ester (product name of ADECA COL PS440E) used in Sample K. As described above, the negative ion transport number is calculated as the ratio Dₐₙᵢₒₙ/ (D_{cation} + Dₐₙᵢₒₙ), namely, the ratio of the self-diffusion coefficient of negative ions to the sum of the self-diffusion coefficients Dₐₙᵢₒₙ and D_{cation} of negative ions and positive ions.

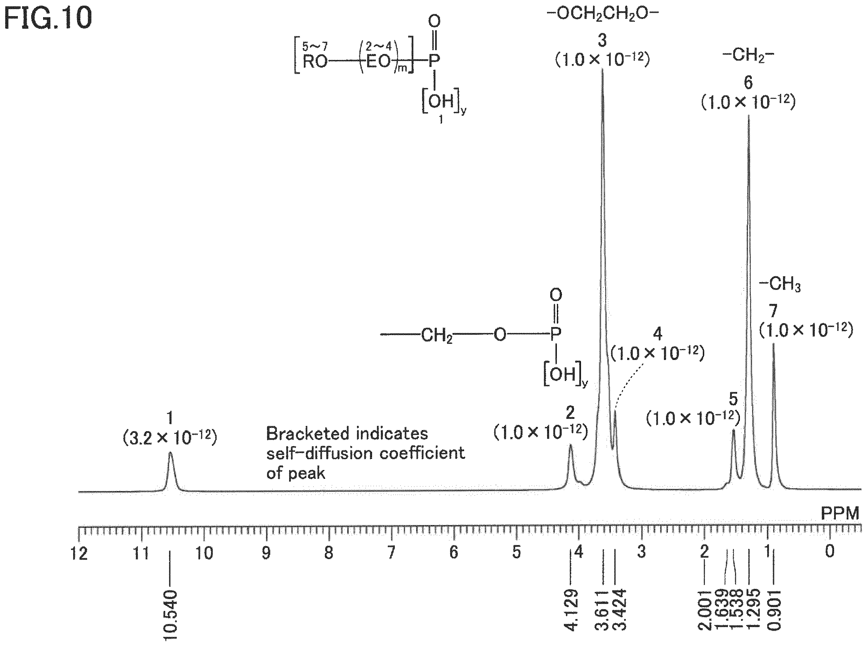

The self-diffusion coefficient of positive ions is 3.2×10⁻¹², and the self-diffusion coefficient of negative ions is 1.0×10⁻¹². The self-diffusion coefficient of positive ions is acquired from Peak 1 of the ¹H-NMR spectrum of FIG. 10. The self-diffusion coefficient of negative ions is the average of Peaks 2 to 7 in the ¹H-NMR spectrum of FIG. 10.

The negative ion transport number calculated from these values is 0.23. From the results of FIG. 8 to FIG. 10, it may be concluded that the polymer gel effectively deforms along the inner wall of the aperture 14 formed in the electrode 13 when the negative ion transport number of the ionic surfactant is 2.0 or greater.

### <APPLICATIONS TO MICROLENS ARRAY>

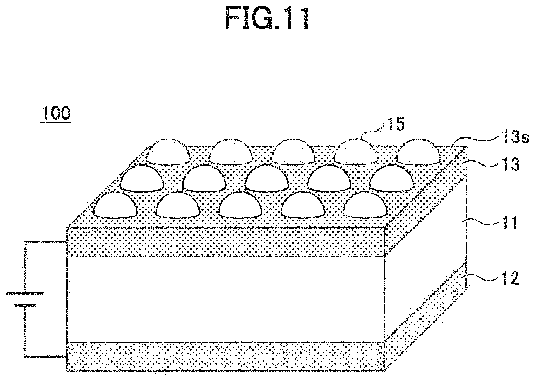

FIG. 11 is a schematic diagram of a microlens array 100 to which the electrically deformable material 11 of the embodiment is applied. The microlens array 100 has a plurality of light scatterers 15 formed in an array on the surface 13s of the electrode 13.

The microlens array 100 has a three-layer structure in which the electrically deformable material 11 is sandwiched between the electrodes 12 and 13. As described above, the electrically deformable material 11 is formed of a polymer gel to which a predetermined amount of ionic liquid or ionic surfactant is added. The ionic liquid to be added is one having a negative ion transport number of 0.4 or greater at 25°C. The amount of the ionic liquid added is preferably 0.2 wt% to 1.5 wt%, more preferably 0.3 wt% to 1.0 wt% with respect to the weight of the polymer gel. When an ionic surfactant is added, one having a negative ion transport number of 0.2 or greater at 25°C is used. The amount of the ionic surfactant to be added is preferably 0.1 wt% to 1.5 wt% with respect to the weight of the polymer gel.

Polymer gel such as PVC, PMMA, PU, PSt, PVAc, PVA, PC, PET, PAN, SR or another suitable material can be used. A plasticizer such as DBA, DEA, DES, DOP, or DEP may be added to the polymer gel.

By applying a voltage between the electrodes 12 and 13, an array of the light scatterers 15 can be produced on the surface 13s of the electrode 13 serving as the anode. The applied voltage is 200 V or lower. Depending on the type of ionic liquid to be added, an array of light scatterers 15 having an average height of 20 µm or higher can be achieved at a voltage of 100 V or lower.

For example, the diameter of the light scatterer 15 is 100 µm, the pitch between the centers is 150 µm, and the distance between two adjacent light scatterers 15 is 50 µm in designed values. The microlens array 100 is formed making use of the voltage responsive deformation of the polymer gel through the micron-sized aperture formed in the film-like electrode 13. The light scatterers 15 having substantially uniform shapes of protrusions are formed on the surface 13s of the electrode 13 if the polymer gel layer is homogeneous.

By controlling the voltage level applied between the electrodes 12 and 13, an array of light scatterers 15 can be produced, and/or the height of the light scatterers 15 can be adjusted.

In the microlens array, the electrode 13 may be formed of an insulating layer such as a resin sheet with apertures, in place of the single-layer conductor. In such a case, both surfaces of the resin sheet and the inner walls of the apertures are coated with a conductive film. Instead of forming apertures in the electrode 13, non-conductive lighttransmitting areas, which can deform following the deformation of the electrically deformable material 11, may be provided to the electrode 13.

The layout of the light scatterers 15 in the microlens array 100 is not limited to the matrix pattern, and other layout pattern such as a staggered pattern may be employed. Alternatively, a close-packed pattern may be employed for the aperture pattern of the electrode 13, forming hexagonal apertures 14.

Although the present invention has been described based on specific examples, the present invention is not limited to the above-described examples. The optical device 10 of FIG. 1 and the microlens array 100 of FIG. 11 can be modified so as to have light scatterers 15 on both sides of the layered structure. The electrode 12 may be used as a common cathode, such that the electrically deformable material 11 is casted onto both surfaces of the electrode 12. By sandwiching the cathode and the layers of the electrically deformable material 11 between two anode electrodes 13, and by applying a voltage between the common cathode and the respective anodes, light scatterers 15 can be produced on both sides of the optical device 10 or microlens array sheet. By providing a transparent cathode as the electrode 12 provided at the center of the layered structure, a double-sided lens unit with optical protrusions on both sides can be acquired. The light scatterers of the microlens array 100 may have a shape of either the light scatterer 15A illustrated in FIG. 2 (A) or the light scatterer 15B illustrated in FIG. 2 (B).

The microlens array 100 of the embodiment is applicable to an imaging system and a lighting device. By providing the light scatterers 15 of the microlens array 100 corresponding to the array of image sensors such as charge coupled devices (CCDs) or complementary metal oxide semiconductors (CMOS), a high resolution and high accuracy imaging system can be achieved.

In the application of the microlens array 100 to a lighting device, the microlens array 100 may be provided onto the entire area of the light output surface of a light source such as an LED lamp so as to control light diffusion, or convert the diffusing light into collimated light while maintaining high brightness. Further, by providing the optical device 10 or the microlens array 100 of the embodiment in the vicinity of the output surface of a fine light emitting device or an array of light emitting devices, a lighting device for a microscope or an industrial use can be achieved.

Because the microlens array 100 can be fabricated as thin as 1 mm or less, and because both the anode and the cathode can be made transparent, the microlens array 100 is applicable to the medical field such as an endoscope system, as well as to an ultra-thin camera, a head-mounted display (HMD), a microlens array (MLA) sheet, or the like. The optical device 10 having a single light scatterer 15 is also applicable to a light diffusion sheet, a lens sheet, or the like in the imaging field and medical field.

The optical device and the microlens array of the embodiment can produce a light scatterer having a variety of light distributions at a reduced driving voltage, without using a complicated mechanism.

The present application is based upon and claims priority to earlier filed Japanese Patent Application No. 2018-243600 filed December 26, 2018, the entirety of which is herein incorporated.

Reference Numerals
- 10:: optical device
- 11:: electrically deformable material
- 12:: electrode (first electrode)
- 13:: electrode (second electrode)
- 14:: aperture
- 15, 15A, 15B:: light scatterer
- 100:: microlens array

## Claims

1. An electrically deformable material comprising:
a gelatinous polymer material; and
an ionic liquid having a negative ion transport number of 0.4 or greater at 25°C.

2. The electrically deformable material as claimed in claim 1,
wherein a weight percentage of the ionic liquid with respect to the polymer material is 0.2 wt% to 1.5 wt%.

3. The electrically deformable material as claimed in claim 1 or 2,
wherein a melting point of the ionic liquid is 25°C.

4. An electrically deformable material comprising:
a gelatinous polymer material; and
an ionic surfactant having a negative ion transport number of 0.2 or greater at 25°C.

5. An optical device comprising:
a first electrode;
a second electrode; and
the electrically deformable material as claimed in any one of claims 1 to 4 sandwiched between the first electrode and the second electrode,
wherein the electrically deformable material forms a light scatterer on a surface of the first electrode or the second electrode when a voltage is applied between the first electrode and the second electrode.

6. The optical device as claimed in claim 5, wherein the light scatterer is formed on an anode.

7. The optical device as claimed in claim 5 or 6,
wherein one or both of the first electrode and the second electrode is a transparent electrode.

8. A microlens array comprising:
a first electrode;
a second electrode; and
the electrically deformable material as claimed in any one of claims 1 to 4 sandwiched between the first electrode and the second electrode,
wherein a plurality of light scatterers are provided on an electrode surface by application of a voltage.

9. A method of fabricating an optical device comprising:
by adding to a gelatinous polymer material an ionic liquid having a negative ion transport number of 0.4 or greater at 25°C or an ionic surfactant having a negative ion transport number of 0.2 or greater at 25°C, preparing an electrically deformable material;
forming an electrically deformable layer by applying the electrically deformable material onto a first electrode;
providing a second electrode onto the electrically deformable layer; and
forming a light scatterer on a surface of the second electrode by applying a voltage between the first electrode and the second electrode to deform the electrically deformable layer.
